# EUROPEAN PATENT APPLICATION

(11) **EP 1 768 358 A1**
(43) Date of publication of application: **28.03.2007**
(21) Application number: 05765472.5
(22) Date of filing: 05.07.2005
(51) Int. Cl.: H04M 1/24, H04L 12/56, H04M 3/00

(54) **VoIP DEVICE TEST SYSTEM AND TEST METHOD**

(30) Priority: 06.07.2004 JP 2004199382
(71) Applicant: Softbank BB Corp., Tokyo 105-7304 (JP)
(72) Inventor: MIYAKAWA, Junichi, Minato-ku, Tokyo 105-7304 (JP)
(74) Representative: Grünecker, Kinkeldey, Stockmair & Schwanhäusser Anwaltssozietät
(86) International application number: PCT/JP2005/012421
(87) International publication number: WO 2006/004125

(57) **Abstract**

An MAC address of each device 8a to 8c under test is entered. An IP address is assigned to each entered MAC address. The IP addresses and telephone numbers assigned to the devices 8a to 8c and a failure test terminal 17 are associated with one another and registered in a system server 4. Out of telephones 10a to 10c connected to the devices 8a to 8c, sets of two telephones are determined. For each set, a call is made from a first telephone connected to the device to a second telephone connected to another device. When the communication is established, a call is made from the called second telephone to the first telephone. If the communication is not established, communication with a telephone 10d connected to the failure test terminal 17 is tried. With this, adequate test on a large number of devices with simple operation is possible in performing an operation test on a VoIP device.

## Description

The present invention relates to a VoIP test system and a test method for performing, in a batch, the operation test of a plurality of VoIP devices capable of converting voice signals into packet data and transmitting and receiving the packet data for making telephone conversations through an IP network.

In recent years, along with the development of IP networks such as the Internet, the development of communication equipments makes it possible to transmit, receive and process a large amount of data, and thereby the so-called Internet telephony enabling telephone conversations through the Internet by converting voice into IP networks is becoming prevalent.

This Internet telephone is implemented by the use of the technique of transmitting and receiving sound data through a TCP/IP network called VoIP (Voice Over Internet Protocol). In many cases, this VoIP network service is provided for users with a rental CPE (Customer Premises Equipment) such as a modem. The maintenance of this rental equipment is required, such as performing operation tests thereof in advance of shipping, investigating failures of this equipment returned after the expiration of the service period, upgrading firmware and so forth.

When performing the maintenance, it is necessary for simulation to connect the device under test with a network which is prepared to approximately provide the actual use environment for testing the operating state. The technique as disclosed in Patent Document 1 is an example known as one of the technique for evaluating the performance of the communication equipment as an element of the network or the performance of the network itself, as has been discussed above. In accordance with the technique disclosed in this Patent Document 1, packets provided for test are transmitted to the network, and the performances of the devices such as modems in the network are estimated by measuring the throughput.

However, in the case of the technique disclosed in this Patent Document 1, the performance of the modem is estimated with reference to the throughput and so forth, and thereby there is a problem in that, even though the overall performance of the network which has been already set up can be measured, it is difficult to separately test the respective devices.

Particularly, when performing the maintenance of an equipment for rent as described above, a variety of tests have to be performed of a large number of devices under test, and thereby there is a problem that the manipulation is complicated and lacks in practicality. Furthermore, in order to evaluate the sound quality of the VoIP device as described above, some person must actually make a call, and there is a problem that quick test operation cannot be performed in the case where the manipulation is cumbersome.

Taking into consideration the above circumstances, it is an object of the present invention to provide a VoIP test system and a test method in which, when performing the operation test of VoIP devices, the test can be appropriately performed by simple operation for a large number of devices under test.

In order to accomplish the object as described above, the present invention provides a test system and method for performing, in a batch, the operation test of a plurality of VoIP devices as devices under test capable of converting voice signals into packet data and transmitting and receiving the packet data for making telephone conversations through an IP network, the test system and method comprising: inputting fixed address information of the respective devices under test; assigning dynamic addresses to the respective fixed addresses as input; registering the dynamic addresses and the telephone numbers assigned to the respective devices under test and a test device in association with each other in a call agent unit.

In addition, arbitrary two equipments are paired from among a plurality of the telephone equipments connected to the devices under test respectively. Then, a call is attempted from a first telephone equipment connected to one device under test of each pair to a second telephone equipment connected to another device under test of the pair, and if a telephone conversation is established, a call is attempted from the second telephone equipment which is called to the first telephone equipment, but if a telephone conversation is not established, a call is attempted to the telephone equipment connected to the test device.

In accordance with the present invention as described above, it is possible for a plurality of the devices under test to build a communication environment which approximately provides the actual use environment in a lump, and effectively perform the operation test for call transmission and reception by minimum operation.

It is preferred in the above invention' that the telephone equipment connected to each of the devices under test is set up in order to make it possible to perform an abbreviated operation for dialing the telephone number which is the telephone number of the telephone equipment connected to another device under test to be called and registered in the call agent unit. In this case, it is possible to perform same manipulation, which is repeatedly performed, by minimum operations, and furthermore improve the efficiency of the test operation.

In accordance with the above invention, said VoIP device is provided with a communication port for data communication which is provided separate from the communication port for telephone conversation, and it is also possible to perform operation check of the communication port for data communication. In this case, the operation test of the data communication can be performed as well as the telephone conversation test, and thereby it is possible to effectively and quickly perform the operation test of devices. Meanwhile, for example in this case, the transmission and reception of data may be file transfer (upload and download): Also, it is preferred that the settings of addresses for transferring data are performed by the use of dynamic addresses which are assigned in accordance with the above invention.

### Brief Description Of The Drawings

Fig. 1 is an explanatory view for schematically showing the configuration of a VoIP test system in accordance with an embodiment.
Fig. 2 is an explanatory view for showing the configuration of the operation screen of the VoIP test system in accordance with the embodiment.
Fig. 3 is a flow chart for showing the procedure of the test method in accordance with the present embodiment.
Fig. 4 is an explanatory view for showing the display on the screen by the test method in accordance with the embodiment.
Fig. 5 is an explanatory view for showing the display on the screen by the test method in accordance with the embodiment.
Fig. 6 is an explanatory view for showing the display on the screen by the test method in accordance with the embodiment.
Fig. 7 is a schematic representation showing the procedure of the conversation test in accordance with the embodiment.
Fig. 8 is an explanatory view for schematically showing the configuration of a VoIP test system in accordance with a modification example.
Fig. 9 is a schematic representation showing the procedure of the Ether port verification test in accordance with the modification example.

### (VoIP Test System)

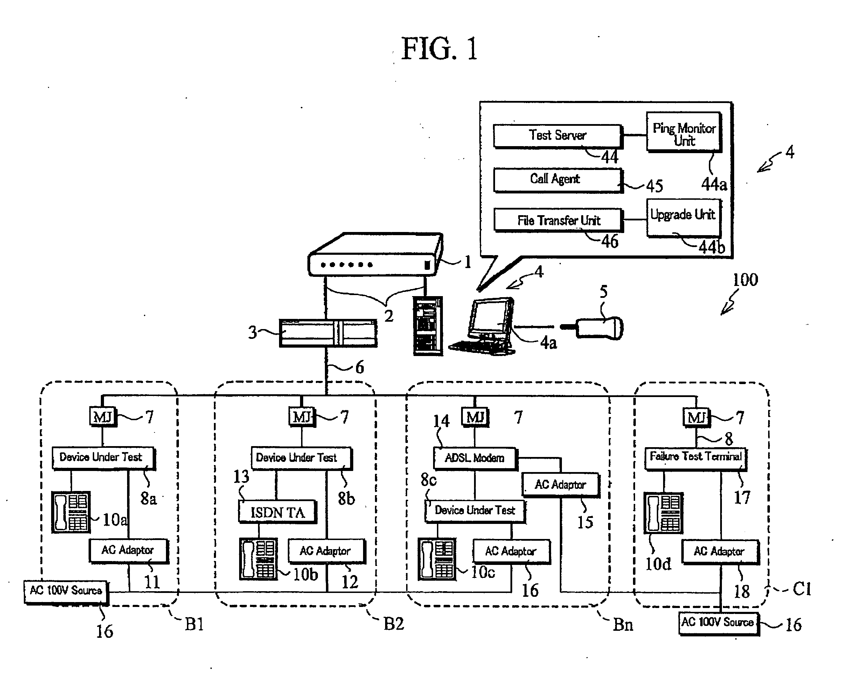

An embodiment of the present invention will be explained with reference to the accompanying drawings. Fig. 1 is an explanatory view for schematically showing the configuration of a VoIP test system in accordance with the present embodiment.

As shown in the same figure, the VoIP test system 100 in accordance with the present embodiment is generally composed of a DHCP (Dynamic Host Configuration Protocol) server 1, a DSLAM (digital subscriber line access muitiplexer) 3, a system server 4, a fixed address input unit 5, units under test B1 to Bn inclusive of devices under test 8a to 8c respectively, and a failure test unit C1 inclusive of a failure test terminal 17 which serves to perform the process of determining failure when detecting failure.

The fixed address input unit 5 is an input device which is connected to the system server 4 and used to input the MAC addresses of the respective devices under test 8a to 8c and the failure test terminal 17. Incidentally, while it is possible to use a keyboard, a mouse, a numeric keypad or the like input device as this fixed address input unit 5, a bar-code reader is employed in the case of the present embodiment so that the respective MAC addresses printed as bar-codes are optically read.

The DHCP server 1 is a server which serves to automatically assign necessary information such as IP addresses to the devices under test 8a to 8c and a failure test computer, and more specifically speaking, it acquires the MAC addresses of the respective devices under test which are input through the fixed address input unit 5, issues the IP addresses corresponding to the respective MAC addresses, and assigns these addresses to the respective devices under test. Incidentally, in the case of the present embodiment, this DHCP server 1 is connected to the system servers 4 and the DSLAM 3 through a straight cable 2.

The DSLAM 3 is a wiring device for aggregating a plurality of communication lines and connecting them with the DHCP server 1, and wires champ cables 6 which are connected to modular jacks 7 provided of the respective units under test B1 to Bn and the failure test unit C1. The DSLAM 3 is connected to the system server 4 through the DHCP server 1 by the straight cables 2.

In the case of the present embodiment, the system server 4 is a server group comprising a test server 44 for running the test system, a call agent 45 for implementing VoIP, and a TFTP (Trivial File Transfer Protocol) server serving as a file transfer unit 46. incidentally, these servers may be implemented as a single server device.

The test server 44 of this system server 4 runs a test application to be described below for VoIP device test, and performs the input of MAC addresses by the fixed address input unit 5 and the registration of the MAC addresses in the DHCP server 1. In addition, the test server 44 is provided with a Ping monitor unit 44a for monitoring a Ping packet and so forth when an IP address is assigned.

Furthermore, for conversation test, the call agent 45 of the system server 4 registers the IP addresses and telephone numbers assigned to the respective devices under test 8a to 8c and the failure test terminal 17 in association with each other, and performs transit exchange operations as a call control device for VoIP communication. Furthermore, the file transfer unit 46 of the system server 4 is provided with an upgrade unit 44b for upgrading a firmware and the like of the respective devices under test 8a to 8c so that it is possible to upgrade the devices under test by performing the transfer of files.

The unit under test B1 is a unit for testing the device under test 8a, which is connected to the DSLAM 3 through the champ cable 6 connected to the modular jack 7 and to which the telephone equipment 10a is connected. Meanwhile, this device under test 8a is connected to an AC adapter 11 and supplied with electric power.

The unit under test B2 is a unit for testing the device under test 8b, which is connected to the DSLAM 3 through the champ cable 6 connected to the modular jack 7 and to which the telephone equipment 10b is connected through an ISDN terminal adapter 13. Meanwhile, this device under test 8b is connected to an AC adapter 12 and supplied with electric power.

The unit under test Bn is a unit for testing the device under test 8c, which is connected to the DSLAM 3 through the champ cable 6 connected to an ADSL modem 14 and the modular jack 7 and to which the telephone equipment 10c is connected. Meanwhile, this device under test 8c and the ADSL modem 14 are connected to an AC adapter 16 and an AC adapter 15 respectively, and supplied with electric power.

The failure test unit C1 is a unit for connecting the failure test terminal 17 with the test system. The failure test terminal 17 is a device to which an IP address and a telephone number are fixedly assigned, and connected to the DSLAM 3 through the champ cable 6 connected to the modular jack 7, and the telephone equipment 10d is connected to the failure test terminal 17. Meanwhile, this failure test terminal 17 is connected to an AC adapter 18, and supplied with electric power from a power supply 16.

Incidentally, the devices under test 8a to 8c and the failure test terminal 17 are modems, terminal adapters, routers or the like, i.e., so-called CPEs (Customer Premises Equipments) which are installed by the user, and given MAC addresses respectively as address information (fixed address information) which are unique and physically fixed to the respective devices under test.

In addition to this, the above telephone equipments 10a to 10d are analog telephone equipments which are used for voice conversations, and provided with a redial function and a function to dial the telephone number of an incoming call. It is possible to perform an abbreviated operation for dialing the telephone number which is the telephone number of the telephone equipment connected to another device under test to be called and registered in the system server 4.

### (Operation Screen)

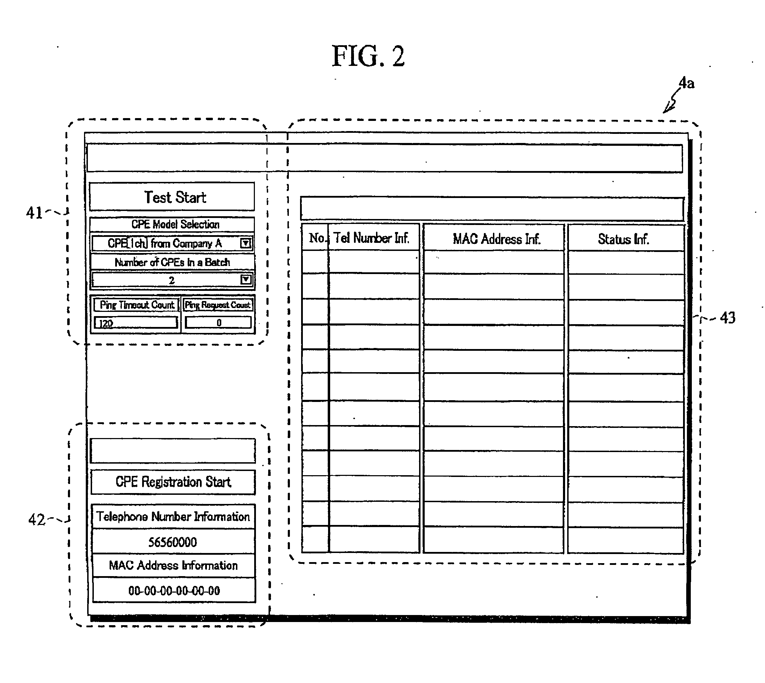

The test server of the system server 4 invokes a test application, and provides an operation screen displayed on the monitor 4a as a user interface. Fig. 2 is an explanatory view for showing the configuration of the operation screen.

The operation screen is composed of a registration condition information list 41, a failure test device registration information list 42 and a device under test registration information list 43.

The registration condition information list 41 is used to display a test start button for indicating the start of test, the model of the selected CPE to be registered, the number of CPEs to be tested in a batch, the setting of Ping timeout count, a Ping execution counter, and so forth. The failure test device registration information list 42 is a section which is used when the failure test terminal 17 is registered, and displays a start button for starting the registration process and the telephone number and MAC address which are assigned to the failure test terminal 17. Meanwhile, when the failure test terminal 17 is not registered, the MAC address is displayed as "00-00-00-00-00-00". The device under test registration information list 43 displays the telephone numbers, MAC addresses and statuses of the devices under test which are registered.

### (Test Method)

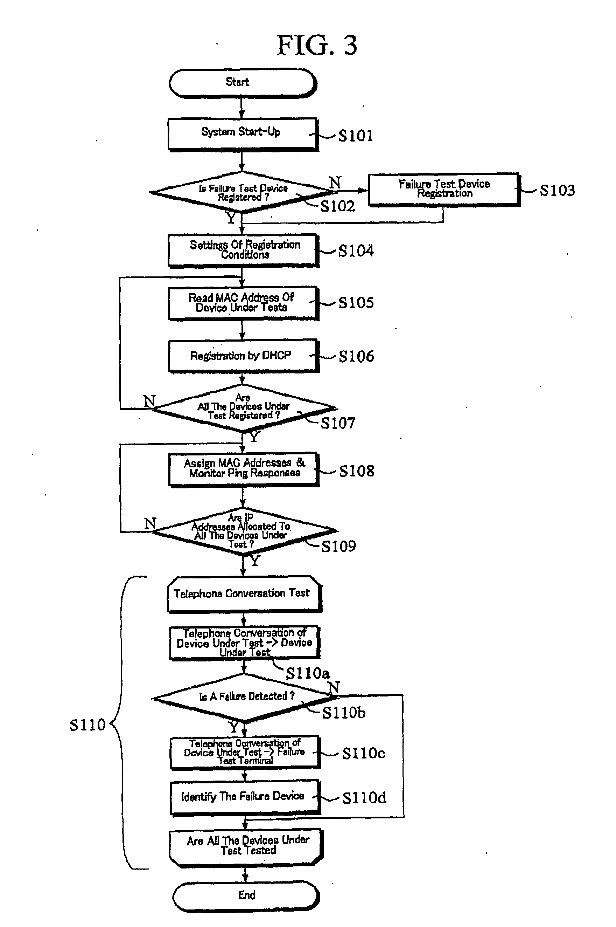

The method of testing VoIP devices is performed by the test system having the structure as described above in accordance with the following procedure. Fig. 3 is a flow chart for showing the procedure of the test method in accordance with the present embodiment.

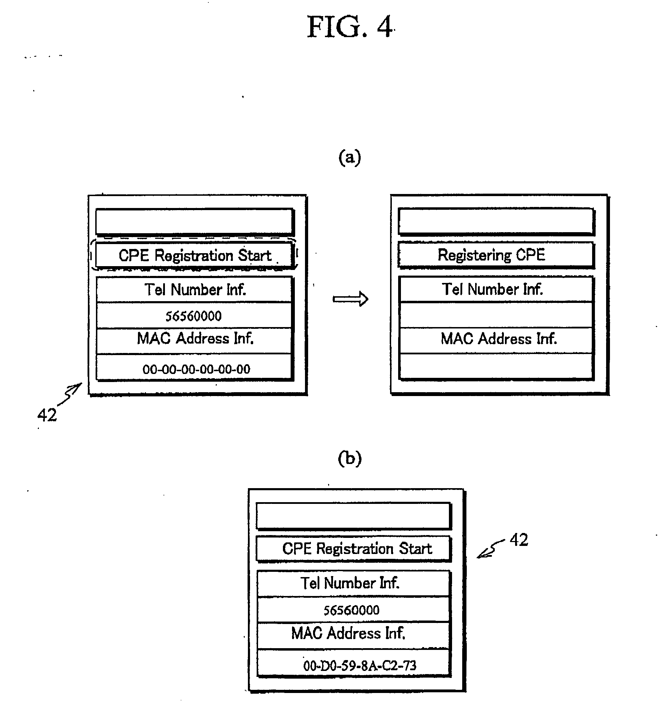

First, the test application is invoked in the system server 4 to display the operation screen as described above on the monitor 4a in step S101. Then, it is determined whether or not the failure test terminal 17 is registered by confirming whether or not the MAC address of the failure test terminal 17 as displayed in the failure test device registration information list 42 is "00-00-00-00-00-00" as shown in Fig. 4(a) in step S102.

In the case where the failure test terminal 17 is not registered in step S102 ("N" in step S102 of Fig. 3), the process proceeds to step S103 in which the failure test terminal 17 is registered. More specifically speaking, as shown in Fig. 4 (a), the telephone number field and the MAC address field are cleared by clicking the "CPE registration start" button to enter a state for waiting for input. In this state, the MAC address of the failure test terminal 17 is read by the fixed address input unit 5. If the MAC address is successively read, the telephone number and the MAC address are displayed as shown in Fig. 4(b).

When the failure test terminal 17 is already registered in step S102 ("Y" in step S102 of Fig. 3) or when step S103 is completed, the settings of registration conditions are performed in step S104.

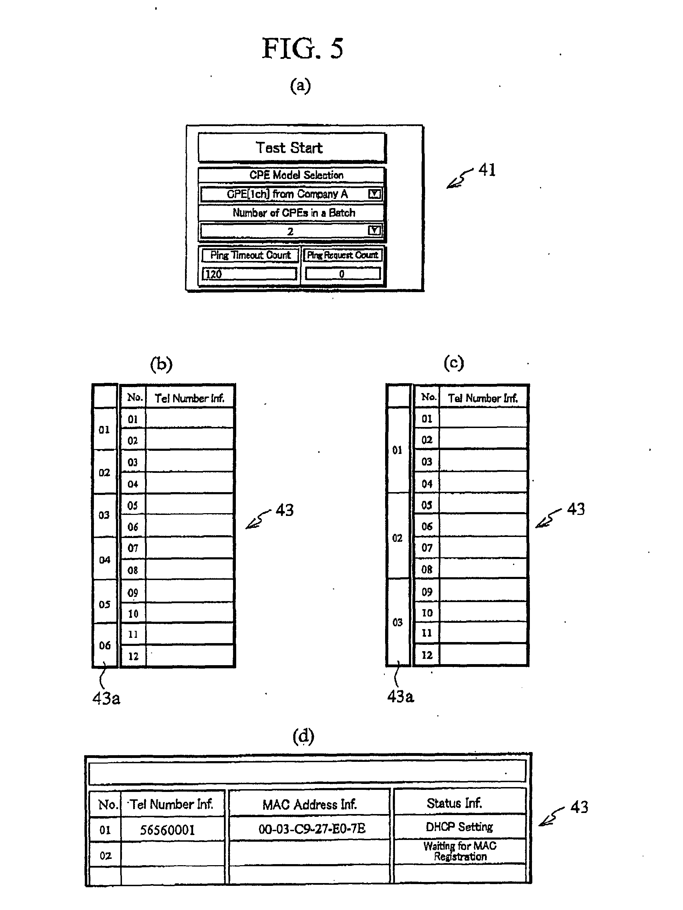

Namely, the registration condition information list 41 of the operation screen as shown in Fig. 5(a) is used to select a terminal model (manufacture model or the like) of the CPE to be registered, select the number of devices to be tested in a batch and set the timeout count during monitoring Ping responses. Incidentally, the selection of the number of device in a batch is made as shown in the following table 1 in accordance with the number of channels and the model of the terminal device as selected.

**[Table 1]**

| | CPE Model Selection | Number of Devices in A Batch | Number of Channels | Terminal Model Name/Model Number | Remarks |
|---|---|---|---|---|---|
| 1 | CPE Manufactured by Company A | up to. 12 | 1 Channels | A010.0x | TA |
| | | | | A007.xx | Modem +TA |
| | | | | A009.0x | |
| | | | | A011.xx | |
| 2 | CPE Manufactured byCompany 8(1 ch) | up to 12 | 1 Channel | B11A-A B11A-A2 | Modem +TA |
| 3 | CPE Manufactured byCompany B (2 ch) | up to 6 | 2 Channels | B12A-A2 BRI | Modem +TA |
| 4 | CPE Manufactured by Company B(4 ch) | up to 3 | 4 Channels | 814 | TA |
| 5 | CPE Manufactured by Company C | up to 3 | 4 Channels | C-44A | TA |
| 6 | CPE Manufactured by Company D | up to 6 | 2 Channels | D-EG10YB | Modem +TA |

In this case, when the number of channels of the model as selected is two, as shown in Fig. 5(b), the device under test registration information list 43 displays an auxiliary screen 43a showing that two channels are treated together, and when the number of channels of the model as selected is four, as shown in Fig. 5(c), the device under test registration information list 43 displays an auxiliary screen 43a showing that four channels are treated together.

After completing the settings of registration conditions, the MAC address of the device under test is registered in step S105. This operation is started by clicking the "Test Start" button of the failure test device registration information list 42. At this time, it is assumed that the respective devices under test are turned off. When the test is started, the system enters a state for waiting for receiving a MAC address through the fixed address input unit 5, and if a MAC address is input through the fixed address input unit 5 as shown in Fig. 5(c), the registration of the MAC address is performed by the DHCP server 1 in step S106. In this step S106, if bar-code information as input is not a MAC address (for example, if the beginning two digits are not "00"), reentering is required, and if the MAC address has already been registered, a message indicative of this fact is displayed.

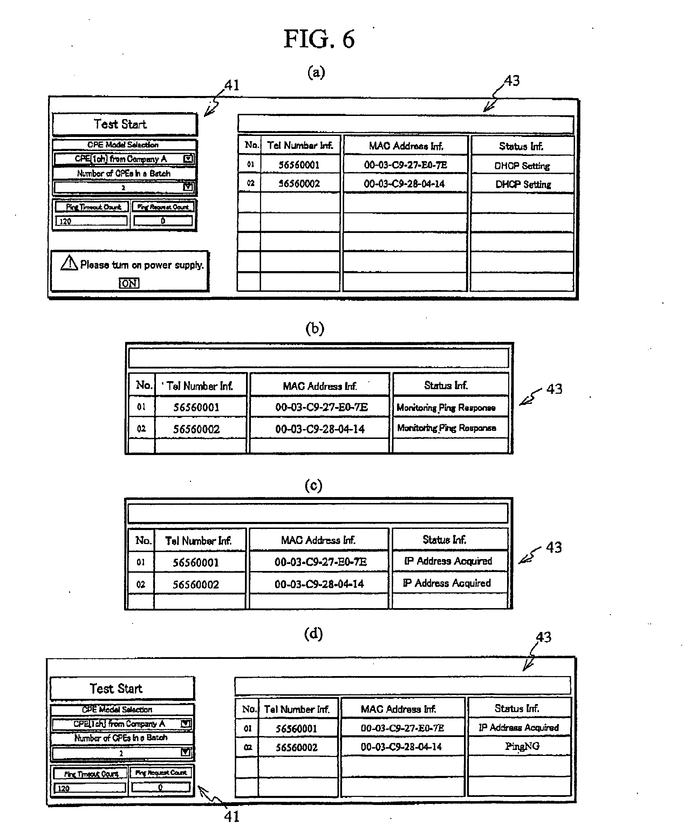

These steps S105 and S106 are performed for all the devices under test by the loop process in step S107. Then, when the registration of MAC addresses has been completed for all the devices under test ("Y" in step S107 of Fig. 3), as shown in Fig. 6(a), the message "Please turn on power supply" is displayed, and the message "Setting DHCP" is displayed as status information, followed by proceeding to step S108. In response to this, the respective devices under test are turned on.

In step S108, Ping requests are issued to the respective devices under test as shown in Fig. 6(b), and this fact is indicated as status information. At this time, as shown in Fig. 6(c), the DHCP server 1 starts assigning IP addresses, and this fact is indicated as status information. It is known by monitoring the response to each Ping request that the power supply is turned on and that an IP address is allocated in step S109.

In the case where it is determined that all the devices under test have acquired IP addresses as allocated in step S109, the process proceeds to step S110 for conversation test. Incidentally, if there is a device under test which returns no response to the Ping request, as shown in Fig. 6(d), "PingNG" is displayed as the status information of the device under test, and selection is requested as to whether or not retry is performed.

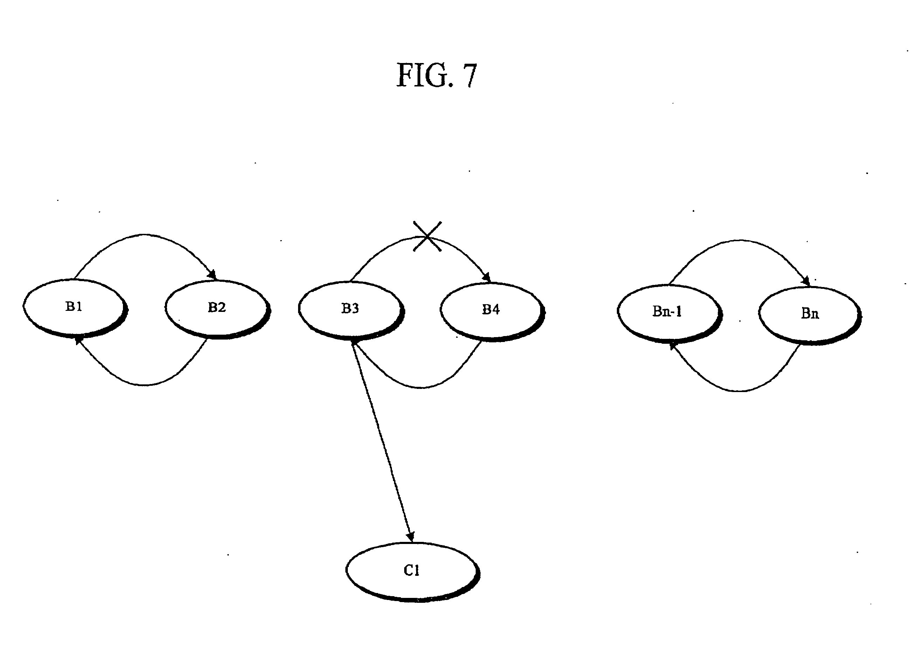

In step S109, as shown in Fig. 7, arbitrary two equipments are paired from among a plurality of telephone equipments connected to the devices under test respectively, and a call is made from one telephone equipment of each pair connected to the device under test (for example, the telephone equipment 10a on the B1 side) to the other telephone equipment (the telephone equipment 10b on the B2 side) in step S110a. In this case, the telephone equipment 10a on the B1 side can perform an abbreviated operation by the redial function for dialing the telephone number of the telephone equipment 10b at the other end of the line.

In the case where the telephone conversation from B1 to B2 can be established, the telephone equipment on the B2 side makes a call to the telephone equipment on the B1 side.
In this case, the telephone number of the telephone equipment 10b on the B2 side can perform an abbreviated operation for' dialing the telephone number of the telephone equipment 10a at the other end of the line by the redial function or the function to dial the telephone number of an incoming call which is notified by the telephone equipment 10a.

When some failure is detected in step S110b, for example, when no telephone conversation can be established ("Y" in step S110b of Fig. 3), a call is tried from either telephone equipment of the pair to the telephone equipment 10d connected to the failure test terminal 17 on the C1 side in step S110c. By this step, it is possible to identify the device under test in which the failure occurs in step S110d.

In the case where a telephone conversation is established in step S110b ("N" in step S110b of Fig. 3), the next telephone equipment pair is tested in the same manner. After completing the conversation test for all the devices under test, the test application is quitted.

### (VoIP Device Test System and Effects by The Test Method)

In accordance with the VoIP test system and the test method of the present embodiment, it is possible for a plurality of the devices under test 8a to 8c to automatically register the MAC addresses thereof, assign IP addresses, monitor Ping responses and so forth, and build a communication environment which approximately provides the actual use environment in a lump. Also, by the use of an abbreviated dialing function or the like provided in the telephone equipments 10a to 10c, it is possible to perform same manipulation, which is repeatedly performed, by minimum operations, and furthermore improve the efficiency of the test operation. As a result, in the case of the present embodiment, it is possible to appropriately perform the operation test of VoIP devices by simple operation for a large number of devices under test.

### (Modification Example)

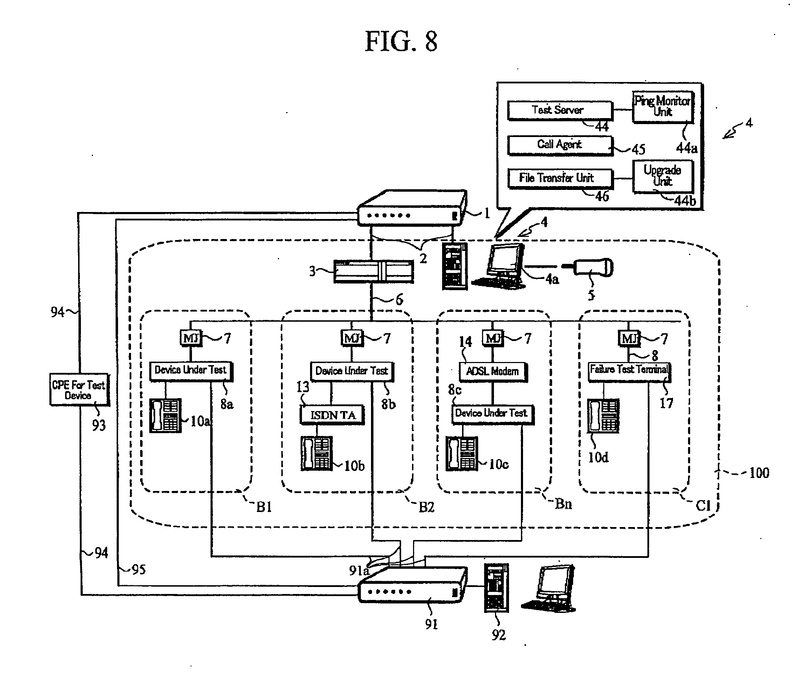

In the above embodiment of the present invention, it is furthermore possible to add a system configuration for Ether port verification test as described in the following description. Fig. 8 is a block diagram showing the system configuration in the case where the Ether port verification test system is added. Meanwhile, in accordance with this modification example, it is assumed that each of the devices under test 8a to 8c is provided with an Ether port as a communication port for data communication which is provided separate from the communication port for telephone conversation.

As shown in Fig. 8, in accordance with this modification example, a switch device 91, a computer 92 for the test system and a CPE 93 for test device are added as instruments for Ether port verification test in addition to the configuration of VoIP test system 100 as described above.

The switch device 91 is a routing device which is connected to the Ether ports of the devices under test 8a to 8c through cables 91a and also connected to the computer 92 for the test system in order to selectively connect the devices under test 8a to 8c to the computer 92 for the test system. This switch device 91 is directly connected to the DHCP server 1 through a cable 95 or connected to the DHCP server 1 through the cable 94 via CPE 93 for test device, and receives control signals from the system server 4 through the cable 94 or 95 for selecting a device under test to be connected.

The switch device 91 is a computer serving to perform file transfer operations between the system server 4 and the devices under test 8a to 8c through the Ether ports thereof. This switch device 91 serves to perform upload and download of files through the device under test as selected by the switch device 91 under the control of the system server 4. Meanwhile, when the file transfer operations are performed, file transfer operations through the cables 94 and 95 may be performed in advance in order to determine whether or not the file transfer is viable and measure a reference value of the transfer speed for the purpose of setting up the Ether port verification test.

The system server 4 performs transmission and reception of files between the file transfer unit 46 and the computer 92 for the test system, and the test server 44 confirms whether or not each Ether port is correctly operating on the basis of the determination of whether or not the file transfer is viable between the system server 4 and the switch device 91 and the transfer speed. In this modification example, when the file transfer operations are performed, the Ping monitor unit 44a performs a Ping process by the use of the IP addresses which are assigned by the DHCP server 1 and registered in the system server 4, and after confirming the establishment of communication the file transfer unit 46 performs a file transfer test.

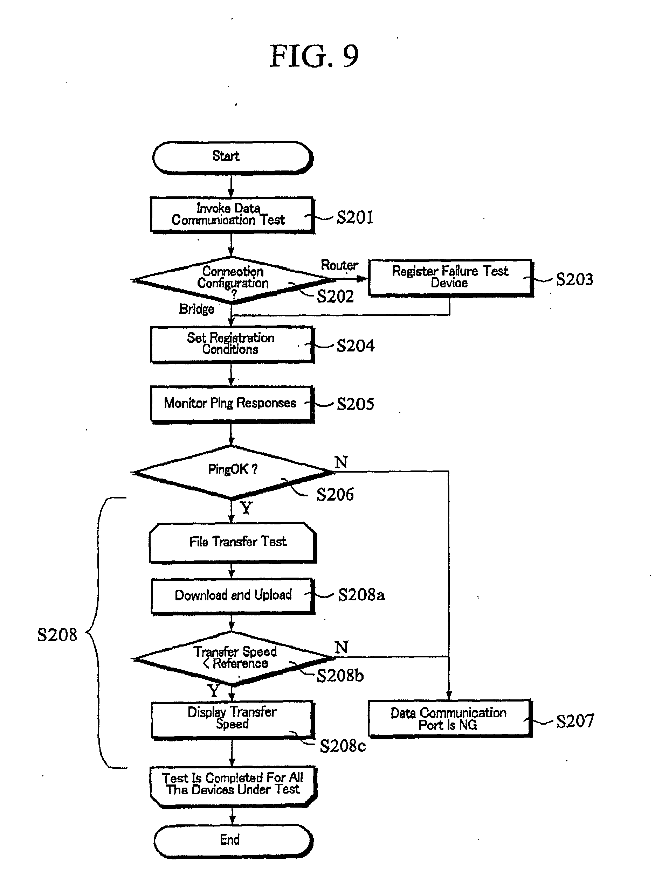

Namely, after completing the VoIP test as described above, as shown in Fig. 9, a program for data communication test (Ether port verification test) is invoked in step S201 to select either the cable 95 or 94 serving as a connection path between the DHCP server 1 and the switch device 91 in accordance with the connection configuration in step S202. When the connection configuration is a router connection, the CPE 93 for test device is registered as a failure test device in step S203 such that the cable 94 is used for connection. On the other hand, the connection configuration is a bridge connection, a connection is made directly through the cable 95.

Thereafter, a variety of registration conditions are set in steps S204 in the same manner as in the embodiment as described above, and the Ping process is started followed by monitoring success and failure thereof in step S205. If the Ping process is not successfully performed ("N" in step S206), it is determined that there is a failure in a data communication port (Ether port) in step S207, and if successfully performed the process proceeds to the file transfer test in step S20B.

In the file transfer test, upload and download of files is performed between the system server 4 and the computer 92 for the test system in step S208a, and if the file transfer is not performed at a reference speed ("N" in step S208b), it is determined that there is a failure in a data communication port (Ether port) in step S207, and if the reference speed is not exceeded the transfer speed is displayed in step S208c. Then, after completing the test for all the devices under test, the Ether port verification test is quitted.

As has been discussed above, the operation test of the data communication can be performed as well as the telephone conversation test by adding the configuration for Ether port verification test to the VoIP test system 100, and thereby it is possible to effectively and quickly perform the operation test of devices.

As has been explained above, in accordance with the present invention, when converting voice signals into packet data and transmitting and receiving the packet data for performing the operation test of VoIP devices through an IP network, it is possible to appropriately perform the operation test by simple operation for a large number of devices under test.

## Claims

1. A test system for performing, in a batch, the operation test of a plurality of VoIP devices as devices under test capable of converting voice signals into packet data and transmitting and receiving the packet data for making telephone conversations through an IP network, said test system comprising:
a fixed address input unit used to input address information (hereinafter referred to as fixed address information) which is uniquely given to the respective devices under test and physically fixed;
a DHCP unit operable to assign address information (hereinafter referred to as dynamic addresses) which is unique and dynamic to each fixed address input through said fixed address input unit;
a test device to which said dynamic address and a telephone number are fixedly assigned;
a call agent unit operable to register said dynamic address and the telephone number assigned to each of the respective devices under test and test device in association with each other; and
telephone equipments connected to said devices under test and said test device respectively and capable of making telephone conversations from one to another through said call agent,
wherein arbitrary two equipments are paired from among a plurality of the telephone equipments connected to the devices under test respectively, and
wherein a call is attempted from a first telephone equipment connected to one device under test of each pair to a second telephone equipment connected to another device under test of the pair, and if a telephone conversation is established, a call is attempted from said second telephone equipment which is called to said first telephone equipment, but if a telephone conversation is not established, a call is attempted to the telephone equipment connected to said test device.

2. The VoIP device test system as claimed in claim 1 wherein the telephone equipment connected to each of said devices under test is set up in order to make it possible to perform an abbreviated operation for dialing the telephone number which is the telephone number of the telephone equipment connected to another device under test to be called and registered in said call agent unit.

3. The VoIP device test system as claimed in claim 1 wherein said fixed address input unit is a bar-code reader.

4. The VoIP device test system as claimed in claim 1 further comprising a monitor unit operable to monitor establishment of connection by transmitting a connection confirmation signal to a dynamic address which is assigned by said DHCP unit and receiving a response to this connection confirmation signal.

5. The VoIP device test system as claimed in claim 1 further comprising an upgrade unit operable to rewrite a program stored in a storage device of each device under test by the use of the dynamic address as assigned by said DHCP unit.

6. The VoIP device test system as claimed in claim 1 wherein said VoIP device is provided with a communication port for data communication which is provided separate from said communication port for telephone conversation, and further comprising a data communication test unit operable to transmit and receive data through said communication port for data communication and perform operation check of said communication port for data communication.

7. A test method of performing, in a batch, the operation test of a plurality of VoIP devices as devices under test capable of converting voice signals into packet data and transmitting and receiving the packet data for making telephone conversations through an IP network, said test method comprising:
a step (1) of inputting fixed address information which is uniquely given to the respective devices under test and assigning dynamic addresses to the fixed addresses;
a step (2) of registering said dynamic address and the telephone number assigned to each of the respective devices under test in association with each other in a call agent unit, and registering said dynamic address and the telephone number assigned to a test device in said call agent unit; and
a step (3) of pairing arbitrary two equipments from among a plurality of the telephone equipments connected to the devices under test respectively, and attempting a call from a first telephone equipment connected to one device under test of each pair to a second telephone equipment connected to another device under test of the pair, wherein if a telephone conversation is established, a call is attempted from said second telephone equipment which is called to said first telephone equipment, but if a telephone conversation is not established, a call is attempted to the telephone equipment connected to said test device.

8. The VoIP device test method as claimed in claim 7 wherein, in said step (3), the telephone equipment connected to each of said devices under test is set up in order to make it possible to perform an abbreviated operation for dialing the telephone number which is the telephone number of the telephone equipment connected to another device under test to be called and registered in said call agent unit.

9. The VoIP device test method as claimed in claim 7 wherein said VoIP device is provided with a communication port for data communication which is provided separate from said communication port for telephone conversation, and further comprising a step of transmitting and receiving data through said communication port for data communication and performing operation check of said communication port for data communication.
